# EUROPEAN PATENT SPECIFICATION

(11) **EP 2 019 010 B1**
(45) Date of publication and mention of the grant of the patent: **22.05.2013**
(21) Application number: 08012954.7
(22) Date of filing: 17.07.2008
(51) Int. Cl.: B60T 8/40, B60T 13/74

(54) **Hydraulic braking device**
Hydraulische Bremsvorrichtung
Dispositif de freinage hydraulique

(30) Priority: 27.07.2007 JP 2007195317
(43) Date of publication of application: 28.01.2009
(73) Proprietor: Hitachi Ltd., Chiyoda-ku Tokyo 100-8280 (JP)
(72) Inventor: Matsubara, Kenichiro, Chiyoda-ku Tokyo 100-8220 (JP); Innami, Toshiyuki, Chiyoda-ku Tokyo 100-8220 (JP); Yokoyama, Atsushi, Chiyoda-ku Tokyo 100-8220 (JP); Kuragaki, Satoru, Chiyoda-ku Tokyo 100-8220 (JP); Nishino, Kimio, Chiyoda-ku Tokyo 100-8220 (JP); Sugawara, Toshiharu, Chiyoda-ku Tokyo 100-8220 (JP)
(74) Representative: MERH-IP Matias Erny Reichl Hoffmann

(56) References cited:
- EP-A2- 0 379 329
- EP-A2- 1 078 833
- WO-A1-97/49590
- WO-A1-99/35018
- WO-A1-2004/005095
- JP-A- 2002 356 149
- US-A1- 2002 158 510

## Description

### FIELD OF THE INVENTION

The present invention relates to a hydraulic braking device which controls a brake force by controlling the working fluid pressure operating at each wheel cylinder of a vehicle.

### BACKGROUND OF THE INVENTION

As a configuration for executing automatic braking by pressurizing and depressurizing a master cylinder independently of a brake pedal operation, a conventional configuration has been disclosed wherein an idling distance is provided between a first operating member, such as a brake pedal or a member indirectly connected to a brake pedal, and a second operating member connected downstream of the flow of the force of an input member in order to mechanically separate the first operating member from the reaction of the force of the automobile braking system in the brake-by-wire mode (for example, refer to Japanese International Patent Publication No. Hei 17 (2005) 532220 or WO 2004/005095 A1)).

Document WO 97/49590 A1 discloses a hydraulic braking device in which a braking force of the braking device is controllable independently from a braking force request of a user of the braking device.

In this context, also documents EP 1078833 A2 and WO 99/35018 A1 should be mentioned which show similar braking devices.

US 2002/158510 A1 describes an electrically driven brake booster including an input member disposed in operative association with a brake pedal, an output member disposed in operative association with the master cylinder, and drive transmitting means.

EP 0 379 329 A2 describes that energisation of a fluid-pressure operated booster is controlled by operation of a solenoid-operated valve means.

JP 2002 356 149 A describes that in a controlled brake booster a solenoid mechanism boosting power pistons and independently of an input rod interlocked with a brake pedal. The solenoid mechanism is controlled by an ACC.

### SUMMARY OF THE INVENTION

However, in a conventional configuration mentioned above, Operation of the second operating member has not been disclosed in cases in which the first operating member is acted upon by a driver's braking operation when the second operating member is operated independently of the first operating member due to the automatic braking. That is, it was unknown whether an appropriate brake force can be generated according to the driver's braking operation during the automatic braking. With respect to this point, there is room for improvement of the conventional configuration mentioned above.

It is an objective of the present invention to provide a safe, easy-to-operate and comfortable hydraulic braking device which can generate a brake force required by a driver even when a driver operates the brake during the automatic braking.

To achieve the above-mentioned objective, the present invention mainly adopts the configuration described in claim 1.

According to the present invention, even when a driver executes a brake operation during the automatic braking, it is possible to generate a brake force required by a driver. Therefore, vehicle behavior at the braking is stabilized, increasing the operability of the brake pedal.

### BRIEF DESCRIPTION OF THE DRAWINGS

FIG.1 is a schematic drawing showing an entire configuration of a hydraulic braking device according to a first embodiment of the present Invention.
FIG.2 shows a flowchart of the first automatic braking control routine executed by a brake force control device.
FIG.3 shows a time chart of each state quantity when the first automatic braking control routine is activated.
FIG.4 shows a flowchart of the second automatic braking control routine executed by a brake force control device.
FIG.5 shows a time chart of each state quantity when the second automatic braking control routine is activated.
FIG.6 is a schematic drawing showing an entire configuration of a hydraulic braking device according to a second embodiment of the present invention. DETAILED

### DESCRIPTION OF THE PREFERRED EMBODIMENTS

### DESCRIPTION OF THE PREFERRED EMBODIMENTS

Each embodiment of a braking device, described later in this document, has the following configuration.
(1) A hydraulic braking device comprising
   a master cylinder,
   a first pressurizing and depressurizing means for pressurizing and depressurizing the master cylinder,
   a second pressurizing and depressurizing means for pressurizing and depressurizing the master cylinder independently of the first pressurizing and depressurizing means,
   a brake force control means for calculating a target brake force and determining a target master cylinder pressure based on the calculated target brake force, and
   a plurality of wheel cylinders operated by working fluid pressure applied by the master cylinder, wherein
   the brake force control means being adapted to execute a master pressure control adapted to control the second pressurizing and depressurizing means according to the target master cylinder pressure and adapted to execute a plurality of brake controls
   the brake force control means is adapted to select and start one of the brake controls when the first pressurizing and depressurizing means is operated by a driver's braking operation during the master pressure control.

   The brake force control means is adapted to control the second pressurizing and depressurizing means in the brake control state according to three brake controls: a first brake control which displaces the second pressurizing and depressurizing means by an amount proportional to a displacement quantity of the first pressurizing and depressurizing means, a second brake control which displaces the second pressurizing and depressurizing means by an amount proportional to a displacement quantity of the first pressurizing and depressurizing means plus a prescribed amount of displacement, and a third brake control which displaces the second pressurizing and depressurizing means so that the second pressurizing and depressurizing means releases the pressure an the master cylinder in the state in which the displacement quantity of the first pressurizing and depressurizing means has returned to zero.
(2) In a hydraulic braking device described in the above item (1), the brake force control means is adapted to when all of the wheel cylinders are operated in the master pressure control, after having switched to one of the brake controls, select the first brake control when the first pressurizing and depressurizing means operates to pressurize the master cylinder, and select the first or third brake control method when the first pressurizing and depressurizing means operates to depressurize the master cylinder.
(3) In a hydraulic braking device described in the above item (1), the brake force control means is adapted to, when one or more wheel cylinders are not operated in the master pressure control, after having switched to one of the brake controls, select the second brake control when the first pressurizing and depressurizing means operates to pressurize the master cylinder, and select the first or third control method is selected when the first pressurizing and depressurizing means operates to depressurize the master cylinder.
(4) In a hydraulic braking device described in the above items (1) to (3), the first pressurizing and depressurizing means pressurize and depressurizes the master cylinder by operating the second pressurizing and depressurizing means.

Hereafter, a hydraulic braking device 1 according to first and second embodiments of the present invention will be described in reference to the drawings.

### [Embodiment 1]

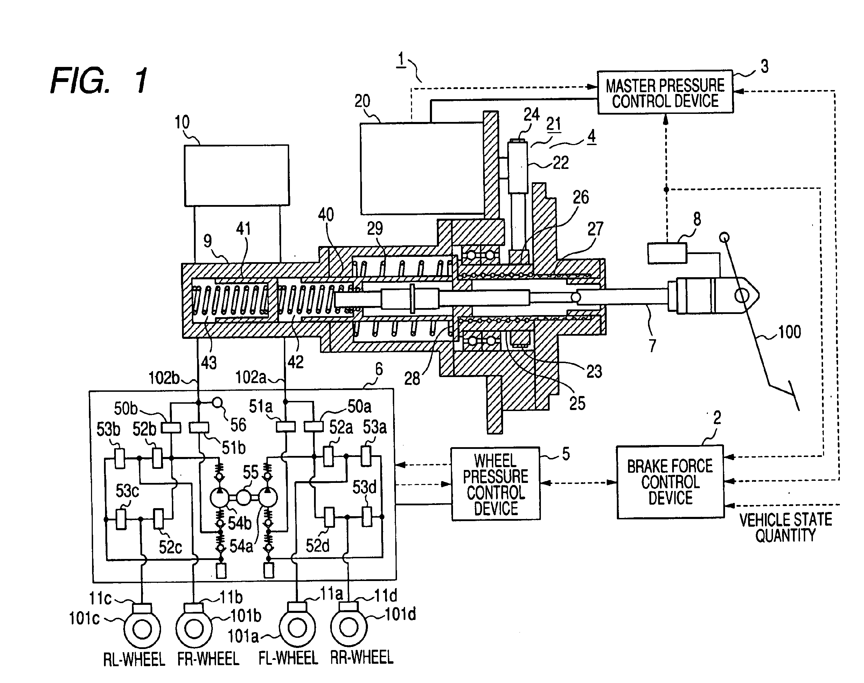

FIG.1 is a schematic drawing showing an entire configuration of a hydraulic braking device 1 according to a first embodiment of the present invention. The FL-wheel indicates the left front wheel, the FR-wheel indicates the right front wheel, the RL-wheel indicates the left rear wheel, and the RR-wheel indicates the right rear wheel. Furthermore, the broken line with an arrow is a signal line, showing that the signal flows in the direction of the arrow.

As shown in FIG.1, the hydraulic braking device 1 comprises a brake force control device 2 which functions as a brake force control means, a master pressure control device 3 and a master pressure control mechanism 4 both of which are usable in conjunction with a second pressurizing and depressurizing means, a wheel pressure control device 5, a wheel pressure control mechanism 6, an input rod 7 which functions as a first pressurizing and depressurizing means, a brake sensor 8, a master cylinder 9, a reservoir 10, and wheel cylinders 11a-d. Furthermore, a brake pedal 100 is usable in conjunction with the first pressurizing and depressurizing means. Moreover, the second pressurizing and depressurizing means includes a primary piston 40 which configures the master cylinder 9.

The brake force control device 2 is an arithmetic processing circuit which calculates a target brake force that is to be generated at each wheel based an the signal from the brake sensor 8, inter-vehicular distance from a leading vehicle, road information, and vehicle state quantity and transmits a control command to the master pressure control device 3 and the wheel pressure control device 5 based on the calculation results. The vehicle state quantity includes, for example, a yaw rate, longitudinal acceleration, lateral acceleration, steering angle, wheel speed, and vehicle speed.

Moreover, the brake force control device 2 bidirectionally communicates with the master pressure control device 3 and the wheel pressure control device 5, and those devices share a control command, vehicle state quantity, failure information, and an operating state.

The master pressure control device 3 is an arithmetic processing circuit which controls a drive motor 20 which configures the master pressure control mechanism 4 based on a control command from the brake force control device 2 and a signal from the brake sensor 8.

The master pressure control mechanism 4 presses the primary piston 40 according to a control command from the master pressure control device 3. The master pressure control mechanism 4 comprises a drive motor 20 which generates rotary torque, a reduction device 21 which amplifies rotary torque of the drive motor 20, and a rotation-translation conversion device 25 which converts rotating power into translational power.

The wheel pressure control device 5 is an arithmetic processing circuit which controls the wheel pressure control mechanism 6 based on a control command from the brake force control device 2.

The wheel pressure control mechanism 6 controls the supply of the working fluid pressurized by the master cylinder 9 to each wheel cylinder 11a-d according to a control command from the wheel pressure control device 5.

The input rod 7 is connected to the brake pedal 100, and its one end is inserted into the primary chamber 42. This configuration allows master pressure to be increased by a driver's braking operation; therefore, in the event that the drive motor 20 stops, a prescribed brake force can be ensured. Furthermore, a force in accordance with the master pressure acts upon the brake pedal 100 via the input rod 7 and can be conveyed to a driver as a brake pedal reaction force. Therefore, a device, such as a spring, for generating a brake pedal reaction force is not necessary although it is required if the above-mentioned configuration is not adopted. Consequently, the hydraulic braking device 1 can be small and light-weight, increasing the ease of installation onto a vehicle.

The brake sensor 8 is a sensor for detecting a brake force required by a driver and is also a stroke sensor for detecting a displacement quantity of the input rod 7.

Moreover, it is desirable that the brake sensor 8 be made up of a plurality of stroke sensors. In this configuration, when a signal from a sensor is lost, other sensors can detect and recognize a driver's brake request. Thus, fail-safe operation can be ensured.

Furthermore, the brake sensor 8 can be a pedal force sensor for detecting a pedal force of the brake pedal 100 and can also be made up of a stroke sensor and a pedal force sensor.

The master cylinder 9 is a tandem type cylinder comprising two pressurizing chambers: a primary chamber 42 pressurized by a primary piston 40 and a secondary liquid chamber 43 pressurized by a secondary piston 41. It is configured such that working fluid pressurized at each pressurizing chamber due to the thrust of the primary piston 40 is supplied to the wheel pressure control mechanism 6 via master pipes 102a-b.

The reservoir 10 comprises at least two liquid chambers divided by a partition wall, not shown, and each liquid chamber is connected to each pressurizing chamber of the master cylinder 9 to communicate with each other.

A wheel cylinder 11a-d comprises a cylinder, a piston, and a pad, those not shown, and the piston is compressed by working fluid supplied by the wheel pressure control mechanism 6 and the pad connected to the piston is pressed by a disc rotor 101a-d.

Moreover, the disc rotor 101a-d rotates along with a wheel, not shown. Therefore, brake torque acted upon the disc rotor 101a-d turns into a brake force to be applied between the wheel and the road surface.

Next, configuration and operation of the master pressure control mechanism 4 will be described.

As stated above, the master pressure control mechanism 4 comprises a drive motor 20, a reduction device 21 and a rotation-translation conversion device 25.

The drive motor 20 operates by electric power supplied according to a control command from the master pressure control device 3 to generate desired rotary torque.

Moreover, a DC motor, a DC brushless motor or an AC motor is suitable for a drive motor 20, and from the viewpoint of controllability, quietness and durability, the DC brushless motor is preferable.

Furthermore, the drive motor 20 has a position sensor, not shown, and the drive motor 20 is configured such that a signal from the position sensor is inputted into the master pressure control device 3. This configuration allows the master pressure control device 3 to calculate a rotation angle of the drive motor 20 based on the signal from the position sensor. And, based on the rotation angle, it is possible to calculate a propulsion quantity of the rotation-translation conversion device 25, that is, a displacement quantity of the primary piston 40.

The reduction device 21 amplifies rotary torque of the drive motor 20 by the amount of its own reduction ratio.

Moreover, gear reduction or pulley reduction is suitable for a reduction method, and the first embodiment adopts the pulley reduction method which comprises a driving pulley 22, a driven pulley 23 and a belt 24.

Furthermore, when rotary torque of the drive motor 20 is sufficiently large and torque does not need to be amplified by reduction, the drive motor 20 can be connected directly to the rotation-translation conversion device 25 without providing a reduction device 21. This configuration can avoid problems that occur due to the presence of the reduction device 21 related to reliability, quietness and installation capability.

The rotation-translation conversion device 25 converts rotating power of the drive motor 20 into translation power thereby pressing the primary piston 40.

Moreover, a rack-pinion or a ball screw is suitable for a conversion mechanism, and the first embodiment adopts a method that uses a ball screw.

As shown in FIG.1, a driven pulley 23 is fitted to the outside of the ball screw nut 26, the ball screw nut 26 is rotated by the rotation of the driven pulley 23, the ball screw axis 27 conducts translational motion, and its thrust presses the primary piston 40 via a moving member 28.

Moreover, one end of the return spring 29 the other end of which is connected to the fixed portion is fitted to the moving member 28 so that a force applied in the reverse direction of the thrust of the ball screw axis 27 acts upon the ball screw axis 27 via the moving member 28. In this configuration, when the drive motor 20 stops and return control of the ball screw axis 27 becomes impossible during braking, that is, during the state in which the primary piston 40 is pressed and master pressure is being applied, a reaction force of the return spring 29 allows the ball screw axis 27 to return to its initial position, and the master pressure decreases to nearly zero. Consequently, it is possible to avoid a vehicle behavior from becoming unstable as the result of brake force drag.

Next, amplification of thrust of the input rod 7 by the master pressure control device 3 and the master pressure control mechanism 4 will be described.

In a first embodiment, by displacing a primary piston 40 according to the displacement quantity of the input rod 7 created by a driver's braking operation, the thrust of the input rod 7 is amplified, causing the primary chamber 42 to be pressurized. The amplification ratio (hereafter, referred to as a boosting ratio) is determined to be an arbitrary value according to the displacement quantity ratio between the input rod 7 and the primary piston 40 or the ratio of the cross-sectional area (hereafter, referred to as A_{IR} and A_{PP}, respectively) between the input rod 7 and the primary piston 40. Specifically, when the primary piston 40 is displaced by the same amount as the displacement quantity of the input rod 7, it is commonly known that the boosting ratio is uniquely determined to be (A_{IR} + A_{PP})/A_{IR}. That is, a constant boosting ratio can be obtained by setting A_{IR} and A_{PP} based on the necessary boosting ratio and controlling the primary piston 40 so that the displacement quantity becomes equal to the displacement quantity of the input rod 7.

As stated above, the displacement quantity of the input rod 7 is detected by a brake sensor 8.

Furthermore, the displacement quantity of the primary piston 40 is calculated by the master pressure control device 3 based on a signal from a position sensor, not shown.

Next, configuration and operation of the wheel pressure control mechanism 6 will be described.

As shown in FIG.1, the wheel pressure control mechanism 6 comprises gate OUT-valves 50a-b for controlling the supply of the working fluid pressurized by the master cylinder 9 to each wheel cylinder 11a-d; gate IN-valves 51a-b, for controlling the supply of the working fluid pressurized by the master cylinder 9 to pumps 54a-b; IN-valves 52a-d for controlling the supply of the working fluid from the master cylinder 9 or the pumps 54a-b to each wheel cylinder 11a-d; OUT-valves 53a-d for controlling the decompression of the wheel cylinders 11a-d; pumps 54a-b for boosting operating pressure generated by the master cylinder 9; a pump motor 55 for driving the pumps 54a-b; and a master pressure sensor 56 for detecting master pressure.

For a wheel pressure control mechanism 6, a hydraulic pressure control unit for the antilock brake control, a hydraulic pressure control unit for the vehicle behavior stabilization control, or a hydraulic pressure control unit for brake-by-wire is suitable.

Furthermore, the wheel pressure control mechanism 6 comprises two braking systems: a first braking system which is supplied with working fluid from the primary chamber 42 to control a brake force of the FL-wheel and the RR-wheel and a second braking system which is supplied with working fluid from the secondary liquid chamber 43 to control a brake force of the FR-wheel and the RL-wheel. Even if one braking system fails, this configuration ensures a brake force to two diagonal wheels by the operation of the other functioning braking system. Consequently, vehicle behavior can be kept stable.

In FIG.1, gate OUT-valves 50a-b are located between the master cylinder 9 and the IN-valves 52a-d and are opened when working fluid pressurized by the master cylinder 9 is supplied to wheel cylinders 11a-d.

Gate IN-valves 51a-b are located between the master cylinder 9 and the pumps 54a-b and are opened when working fluid pressurized by the master cylinder 9 is boosted by the pumps 54a-b and supplied to the wheel cylinders 11a-d.

IN-valves 52a-d are located upstream of the wheel cylinders 11a-d and are opened when working fluid pressurized by the master cylinder 9 or the pumps 54a-b are supplied to the wheel cylinders 11a-d.

OUT-valves 53a-d are located downstream of the wheel cylinders 11a-d and are opened when the wheel pressure is reduced.

Moreover, gate OUT-valves 50a-b, gate IN-valves 51a-b, IN-valves 52a-d, and OUT-valves 53a-d are electromagnetic valves which are opened and closed by turning on and off electric power to the internal solenoid, not shown. The amount of each valve opening is adjusted by electric current controlled by the wheel pressure control device 5.

Furthermore, gate OUT-valves 50a-b, gate IN-valves 51a-b, IN-valves 52a-d, and OUT-valves 53a-d can be either a normally-open valve or normally-closed valve. In a first embodiment, gate OUT-valves 50a-b and IN-valves 52a-d are normally-open valves, and gate IN-valves 51a-b and OUT-valves 53a-d are normally-closed valves. Even when electric power to each valve stops, this configuration allows the gate IN-valves 51a-b and the OUT-valves 53a-d to close and the gate OUT-valves 50a-b and the IN-valves 52a-d to open; therefore, working fluid pressurized by the master cylinder 9 can reach all of the wheel cylinders 11a-d. As a result, it is possible to generate a brake force required by a driver.

When pressure greater than the operating pressure of the master cylinder 9 is necessary, for example, to execute vehicle behavior stabilization control or automatic braking operation, pumps 54a-b can boost the master pressure to apply to the wheel cylinders 11a-d.

Moreover, a plunger pump, trochoid pump, or a gear pump is suitable for the pump 54a-b and from the view point of the quietness, the gear pump is preferable.

The pump motor 55 is operated by electric power supplied based on a control command sent from the wheel pressure control device 5 and drives the pumps 54a-b connected to the pump motor 55 itself.

Moreover, a DC motor, DC brushless motor, or an AC motor is suitable for a pump motor 55, and from the viewpoint of the controllability, quietness, and durability, the DC brushless motor is preferable.

The master pressure sensor 56, which is located downstream of the secondary-side master pipe 102b, is a pressure sensor that detects master pressure.

Moreover, the number of master pressure sensors 56 and their installation locations can be arbitrarily determined by considering the controllability and fail-safe operation.

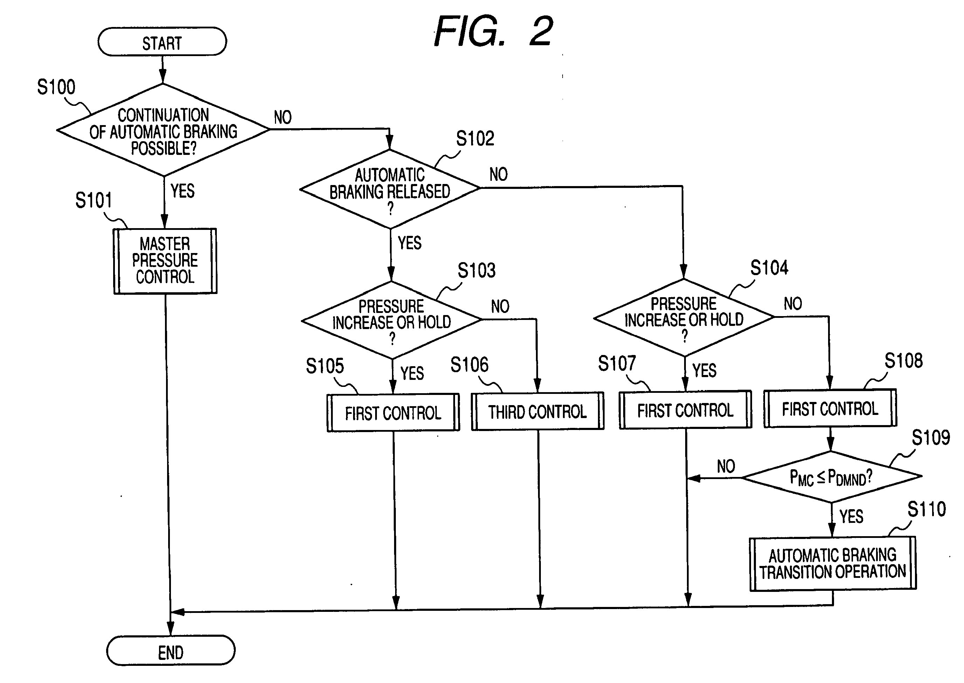

Operations executed by a hydraulic braking device 1 according to an embodiment of the present invention, specifically, operations conducted when automatic braking is executed and operations conducted when a driver executes a brake operation during the automatic braking will be described with reference to FIG.2 to FIG.5.

First of all, description will be made about a first automatic braking control routine (hereafter, referred to as a first routine) executed by the brake force control device 2 and the primary piston 40 control executed by a second automatic braking control routine (hereafter, referred to as a second routine), specifically, master pressure control, first control, second control, and third control.

The master pressure control is to advance and retract the primary piston 40 so as to adjust the operating pressure of the master cylinder 9 to become equal to the hydraulic pressure required by the automatic braking (hereafter, referred to as automatic braking request hydraulic pressure).

Moreover, in this case, there are two primary piston 40 control methods: a method in which the primary piston 40 displacement quantity that can achieve automatic braking request hydraulic pressure is obtained based on the relation between the primary piston 40 displacement quantity that has been obtained as a table and the master pressure and the displacement quantity is used as a target value, and a method which can feed back master pressure detected by the master pressure sensor 56. Either method can be adopted.

The first control is to displace the primary piston 40 by the amount obtained by multiplying the input rod 7 displacement quantity by a proportional gain (hereafter, referred to as K₁).

Although it is preferable that K₁ be 1 from the viewpoint of controllability, when a brake force is greater than the brake force generated by a driver's braking operation, for example, due to emergency braking, it is possible to temporarily change K₁ to a value greater than 1. By doing so, it is possible to increase master pressure higher than usual (K₁ = 1) by applying the same amount of brake operation; therefore, a larger brake force can be generated. Herein, application of the emergency braking can be determined, for example, by whether a time change rate of a signal of the brake sensor 8 exceeds a prescribed value or not.

As stated above, according to the first control, because master pressure can be increased and decreased according to the input rod 7 displacement quantity in accordance with a driver's brake request, it is possible to generate a brake force required by a driver.

The second control is to propel the primary piston 40 by a prescribed offset thereby executing the first control.

The second control is to be applied when the state must be changed, for example, from the state (hereafter, referred to as two-wheel braking) in which automatic braking operating pressure is applied to only two wheels on either the right side or left side due to the lane departure avoidance control or the obstacle avoidance control to the state (hereafter, referred to as four-wheel braking) in which operating pressure is applied to all of the four wheels according to a driver's brake request. Mainly, this control aims to avoid working fluid from becoming insufficient when two-wheel braking is switched to four-wheel braking. That is, the second control inhibits the decrease in master pressure due to the decrease in the amount of working fluid; consequently, it is possible to avoid a brake force from decreasing in association with the decrease in the master pressure.

Moreover, there are two offset determination methods, as shown below, and either one can be adopted.

In the first determination method, based on the relations between the primary piston 40 displacement quantity and the master pressure at the two-wheel braking and at the four-wheel braking, respectively, which have been obtained as a table, each value of the primary piston 40 displacement quantity that can achieve target brake hydraulic pressure at the two-wheel braking and at the four-wheel braking, respectively, is obtained, and the difference between those two values (displacement quantity at the four-wheel braking minus displacement quantity at the two-wheel braking) is recognized as an offset.

In the second determination method, feedback control which refers to the output of the master pressure sensor 56 is executed so that master pressure will reach the target brake hydraulic pressure when two-wheel braking is switched to four-wheel braking, thereby propelling the primary piston 40.

Moreover, target brake hydraulic pressure can be arbitrarily determined according to a driver's brake request; however, for example, it can be automatic braking request hydraulic pressure.

Furthermore, the first control executed in the second control procedure is the same as the first control mentioned above.

As stated above, according to the second control, the primary piston 40 is controlled independently of the first control so that the decrease in master pressure is suppressed when two-wheel braking is switched to four-wheel braking. As a result, it is possible to generate a brake force required by a driver.

The third control is to displace the primary piston 40 by the amount obtained by multiplying the input rod 7 displacement quantity by a proportional gain (hereafter, referred to as K₃).

The third control is applied specifically when a driver's brake request is a pressure decrease request and is to displace the primary piston 40 so that the master pressure reaches nearly zero at the same time when the input rod 7 displacement quantity reaches nearly zero.

Moreover, initial values (hereafter, referred to as X_{IRO} and X_{PPO}, respectively) of displacement quantity of the input rod 7 and the primary piston 40 at the beginning of the third control are to be stored, and the ratio of X_{PPO} to X_{IRO} is appropriate for K₃. Herein, when determining the value of K₃, the amount of invalid stroke of the master cylinder 9 can be considered for X_{PPO}.

As stated above, according to the third control, the primary piston 40 is controlled so that master pressure reaches nearly zero when a brake force required by a driver reaches nearly zero. As a result, it is possible to generate a brake force required by a driver.

FIG.2 shows a flowchart of the first routine executed by the brake force control device 2.

The first routine is applied to the four-wheel braking control, for example, inter-vehicular distance control or collision avoidance control.

Furthermore, the first routine is repeatedly activated at prescribed time intervals.

When the first routine is activated, the operation in step 100 is first executed.

In step 100, whether the automatic braking can be continued or not is determined. If the automatic braking is determined to continue, the operation in step 101 is executed, and if it is determined not to continue, the operation in step 102 is executed.

Moreover, in step 100, the continuation of automatic braking is determined to be possible, for example, when a driver does not execute a brake operation or when the master pressure is equal to or less than the automatic braking request hydraulic pressure.

In step 101, the master pressure control is executed and operating pressure of the master cylinder 9 is adjusted to become equal to the automatic braking request hydraulic pressure.

In this case, the automatic braking request hydraulic pressure is determined based on the target brake force calculated by the brake force control device 2.

In step 102, whether the automatic braking is to be released or not is determined. If the automatic braking is determined to be released, the operation in step 103 is executed, and if it is determined not to be released, the operation in step 104 is executed.

Moreover, in step 102, it is determined whether the automatic braking is released or not, for example, based on the vehicle state quantity and the inter-vehicular distance from a leading vehicle.

However, it is desirable that the automatic braking not be released while the collision damage reduction brake control is being executed.

In step 103, it is determined that a driver's brake request is either a pressure increase request or a pressure hold request. If the driver's brake request is determined to be either a pressure increase request or a pressure retention request, the operation in step 105 is executed, and if it is determined to be neither, the operation in step 106 is executed.

Moreover, in step 103, it is determined whether the driver's brake request is a pressure increase request, pressure hold request, or a pressure decrease request, for example, based on a time change rate of the input rod 7 displacement quantity detected by the brake sensor 8.

In step 105, the first control is executed and the current routine finishes.

In step 106, the third control is executed and the current routine finishes.

In step 104, in the same manner as step 103, it is determined that a driver's brake request is either a pressure increase request or a pressure hold request. If the driver's brake request is determined to be either a pressure increase request or a pressure retention request, the operation in step 107 is executed, and if it is determined to be neither, the operation in step 108 is executed.

In step 107, the first control is executed and the current routine finishes.

In step 108, the first control is executed.

In step 109, it is determined that the master pressure (P_{MC}) is either equal to or less than the automatic braking request hydraulic pressure (P_{DMMD}). If the master pressure (P_{MC}) is determined to be either equal to or less than the automatic braking request hydraulic pressure (P_{DMND}), the operation in step 110 is executed, and if it is determined to be neither, the current routine finishes.

In step 110, the automatic braking transition operation is executed.

Moreover, the automatic braking transition operation is, for example, to turn on the automatic braking enabled flag.

As stated above, the first routine executed by the brake force control device 2 can achieve appropriate automatic braking, and even when a driver executes a brake operation during the automatic braking, the primary piston 40 control is properly selected and executed based on the automatic braking release conditions, a driver's brake request. Therefore, vehicle behavior at the braking is stabilized, increasing the operability of the brake pedal 100.

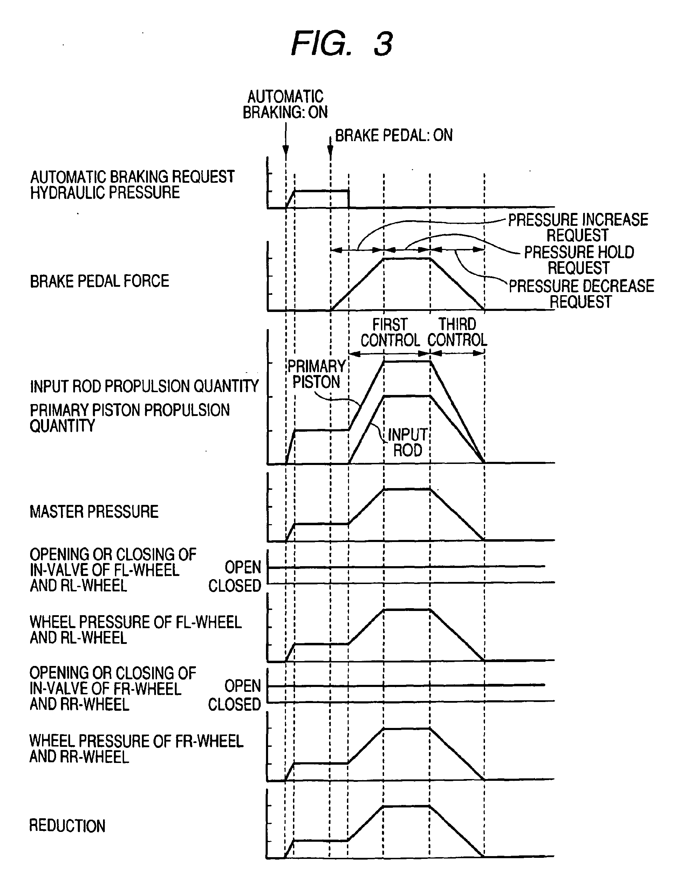

FIG.3 shows a time chart of each state quantity when the first routine is activated. Herein, as an example, a situation in which the automatic braking is released in step 102 is assumed. However, also in other situations, appropriate control is selected and executed according to the flowchart shown in FIG.2.

Hereafter, change of each state quantity will be described according to the chart.

First of all, during the period after the automatic braking has been turned on until the brake pedal 100 is turned on, the primary piston 40 is controlled by means of the master pressure control so that the master pressure is kept equal to the automatic braking request hydraulic pressure.

Because IN-valves 52a-d of all wheels are opened in the first routine, each wheel pressure is controlled so that it is almost equal to the master pressure. Thus, reduction in accordance with a target brake force can be achieved.

Next, during the pressure increase request period, when a brake pedal 100 force exceeds the force that is in accordance with the master pressure which is kept equal to the automatic braking request hydraulic pressure, the input rod 7 starts to be displaced, and simultaneously, the primary piston 40 starts to be controlled by the first control method.

At the timing when the input rod 7 starts to be displaced, the brake sensor 8 detects a driver's brake request. Therefore, based on this, the automatic braking request hydraulic pressure is reduced to zero.

Next, during the pressure hold request period, in the same manner as the pressure increase request period, the first control method continues to control the primary piston 40. Thus, prescribed reduction can be maintained.

Next, during the pressure decrease request period, the third control method controls the primary piston 40. Thus, prescribed reduction can be achieved.

Moreover, as shown in the flowchart in FIG.2, if a driver's brake request is switched to a pressure increase request or a pressure hold request during the third control, it is possible to switch to the first control.

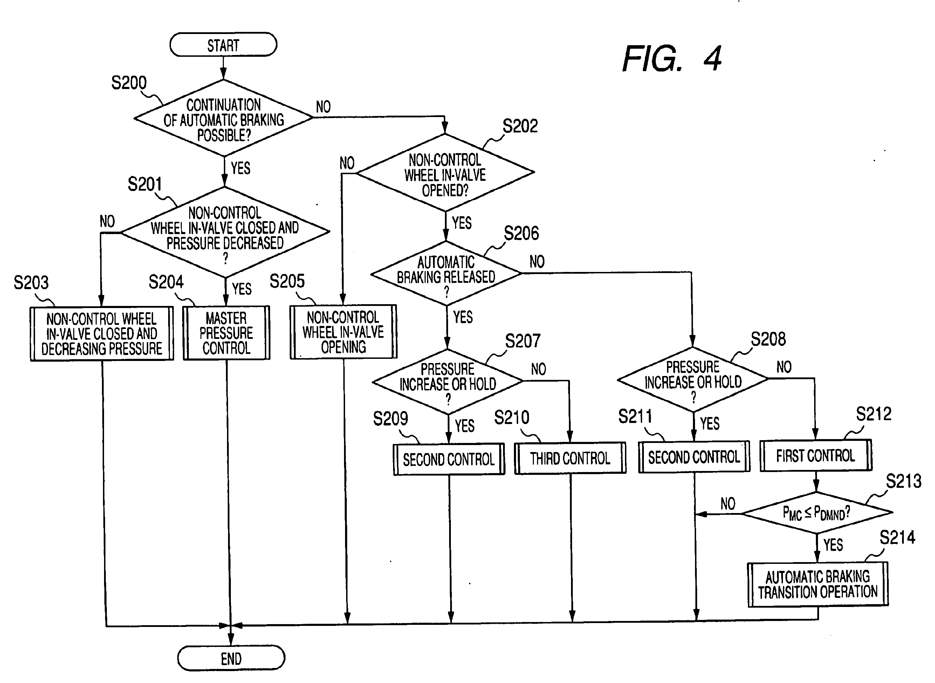

FIG.4 shows a flowchart of the second routine executed by the brake force control device 2. The second routine is applied to the two-wheel braking control, for example, lane departure avoidance control or obstacle avoidance control. Furthermore, the second routine is activated repeatedly at prescribed time intervals.

When the second routine is activated, the operation in step 200 is first executed.

In step 200, whether the automatic braking can be continued or not is determined. If the automatic braking is determined to continue, the operation in step 201 is executed, and if it is determined not to continue, the operation in step 202 is executed.

Moreover, in step 200, the continuation of automatic braking is determined to be possible, for example, when a driver does not execute a brake operation or when the master pressure is equal to or less than the automatic braking request hydraulic pressure.

In step 201, it is determined that IN-valves 52a-d of the wheels to which automatic braking is not applied (hereafter, referred to as a non-control wheel) are closed and the decompression of the wheel pressure has been completed. If those valves are closed and the decompression of the wheel pressure has been completed, the operation in step 204 is executed, and if that situation has not been realized, the operation in step 203 is executed.

In step 203, IN-valves 52a-d of non-control wheels are closed and decompression of wheel pressure is executed. By doing so, supply of the working fluid pressurized by the master cylinder 9 to the wheel cylinders 11a-d of the non-control wheels stops, and wheel pressure at the four-wheel braking is reduced to almost zero. Therefore, it is possible to generate a brake force only at the wheels to which automatic braking is applied (hereafter, referred to as a control wheel).

In step 204, master pressure control is executed, and operating pressure of the master cylinder 9 is adjusted to become equal to the automatic braking request hydraulic pressure.

In this case, the automatic braking request hydraulic pressure is determined based on the target brake force calculated by the brake force control device 2.

In step 202, whether the IN-valves 52a-d of non-control wheels have been opened or not is determined. If the IN-valves 52a-d of the non-control wheels have been opened, the operation in step 206 is executed, and if they have not been opened, the operation in step 205 is executed.

In step 205, IN-valves 52a-d of the non-control wheels are to be opened. By doing so, the working fluid pressurized by the master cylinder 9 can be supplied to the wheel cylinders 11a-d of the non-control wheels. Therefore, it is possible to generate a brake force at all four wheels.

In step 206, whether the automatic braking is to be released or not is determined. If the automatic braking is determined to be released, the operation in step 207 is executed, and if the automatic braking is determined not to be released, the operation in step 208 is executed.

Moreover, in step 206, whether the automatic braking is to be released or not is determined, for example, based on the vehicle state quantity and the inter-vehicular distance from a leading vehicle.

However, it is desirable that the automatic braking not be released while the collision damage reduction brake control is being executed.

In step 207, it is determined that a driver's brake request is either a pressure increase request or a pressure hold request. If the driver's brake request is determined to be either a pressure increase request or a pressure retention request, the operation in step 209 is executed, and if it is determined to be neither, the operation in step 210 is executed

Moreover, in step 207, it is determined whether the driver's brake request is a pressure increase request, pressure hold request, or a pressure decrease request, for example, based on a time change rate of the input rod 7 displacement quantity detected by the brake sensor 8.

In step 209, the second control is executed and the current routine finishes.

In step 210, the third control is executed and the current routine finishes.

In step 208, in the same manner as step 207, it is determined that a driver's brake request is either a pressure increase request or a pressure hold request. If the driver's brake request is determined to be either a pressure increase request or a pressure retention request, the operation in step 211 is executed, and if it is determined to be neither, the operation in step 212 is executed

In step 211, the second control is executed and the current routine finishes.

In step 212, the first control is executed.

In step 213, it is determined that the master pressure (P_{MC}) is either equal to or less than the automatic braking request hydraulic pressure (P_{DMND}). If the master pressure (P_{MC}) is determined to be either equal to or less than the automatic braking request hydraulic pressure (P_{DMND}), the operation in step 214 is executed, and if it is determined to be neither, the current routine finishes.

In step 214, the automatic braking transition operation is executed.

The automatic braking transition operation is, for example, to turn on the automatic braking enabled flag.

As stated above, the second routine executed by the brake force control device 2 can achieve appropriate automatic braking, and even when a driver executes a brake operation during the automatic braking, the primary piston 40 control is properly selected and executed based on the automatic braking release conditions and a driver's brake request. Therefore, vehicle behavior at the braking is stabilized, increasing the operability of the brake pedal 100.

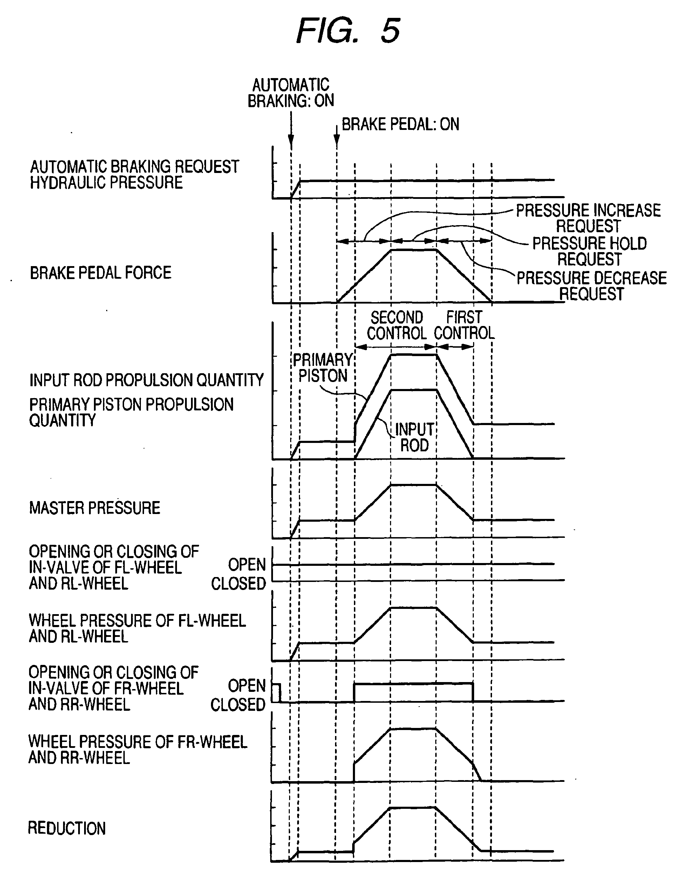

FIG.5 shows a time chart of each state quantity when the second routine is activated. Herein, as an example, a situation in which the automatic braking is not released in step 206 is assumed. However, also in other situations, appropriate control is selected and executed according to the flowchart shown in FIG.4. Furthermore, herein, a situation in which control wheels are the two wheels on the left side (the FL-wheel and the RL-wheel) is shown. However, also in other situations, appropriate control is selected and executed according to the flowchart shown in FIG.4.

Hereafter, change of each state quantity will be described according to the chart.

First of all, during the period after the automatic braking has been turned on until the brake pedal 100 is turned on, the primary piston 40 is controlled by means of the master pressure control so that the master pressure is kept equal to the automatic braking request hydraulic pressure.

Moreover, before the automatic braking is turned on, IN-valves, 52b, 52d, of the FR-wheel and the RR-wheel, which are non-control wheels, are closed.

Next, during the pressure increase request period, when a brake pedal 100 force exceeds the force that is in accordance with the master pressure which is kept equal to the automatic braking request hydraulic pressure, the input rod 7 starts to be displaced, and simultaneously, the primary piston 40 starts to be controlled by the second control method.

Moreover, at the timing when the input rod 7 starts to be displaced, the brake sensor 8 detects a driver's brake request. Therefore, based on this, IN-valves 52b,d, of the FR-wheel and the RR-wheel, which are non-control wheels, are opened. At this point in time, open timing for each IN-valve 52b,d can be staggered. By doing so, a time change rate of the displacement quantity of the primary piston 40 can be suppressed; consequently, change of the reduction can be further improved.

Next, during the pressure hold request period, in the same manner as the pressure increase request period, the second control method continues to control the primary piston 40. Thus, prescribed reduction can be maintained.

Next, during the pressure decrease request period, the first control method controls the primary piston 40. Thus, prescribed reduction can be achieved.

Moreover, at the timing when the input rod 7 displacement quantity has reached almost zero, it is determined that a driver's brake request has been released based on a signal from the brake sensor 8. Therefore, based on this, in order to continue the two-wheel braking, IN-valves 52b,d of the FR-wheel and the RR-wheel, which are non-control wheels, are closed.

As stated above, according to a hydraulic braking device 1 in accordance with a first embodiment of the present invention, even when a driver executes a brake operation during the automatic braking, it is possible to generate a brake force required by a driver. Therefore, vehicle behavior at the braking is stabilized, increasing the operability of the brake pedal 100.

### [Embodiment 2]

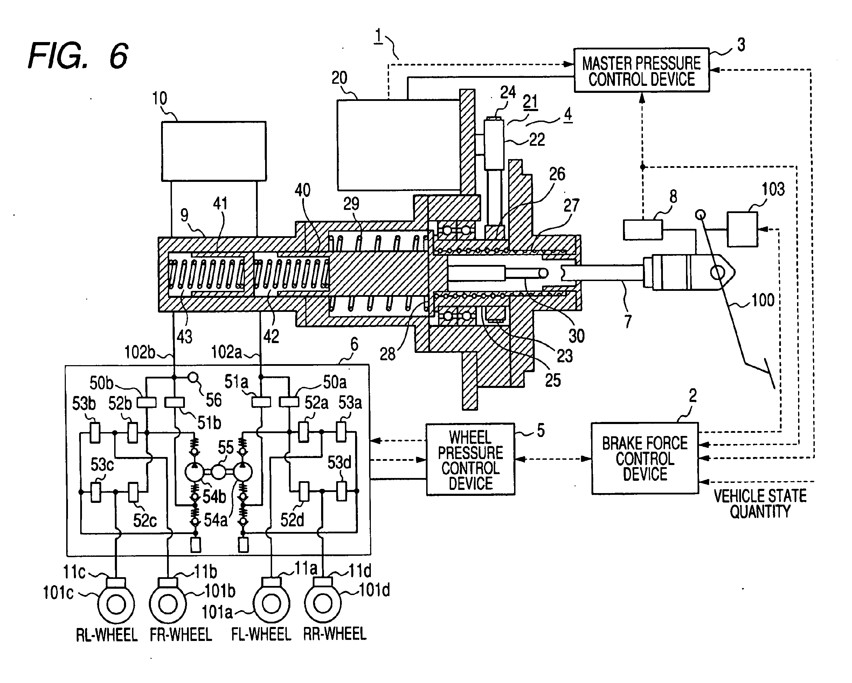

FIG.6 is a schematic drawing showing an entire configuration of a hydraulic braking device 1 according to a second embodiment of the present invention. The same number is assigned to the same portion as that of the first embodiment and description is omitted.

The second embodiment differs from the first embodiment in that the input rod 7 is not inserted into the primary chamber 42; the conveying member 30 is connected to the moving member 28; the input rod 7 and the conveying member 30 are disposed with a certain gap; and the reaction force generation mechanism 103 is connected to the brake pedal 100. Herein, the reaction force generation mechanism 103 generates a prescribed reaction force according to a control command from the brake force control device 2 and makes the reaction force act upon the brake pedal 100.

That is, the first routine executed by the brake force control device 2 and the primary piston 40 control executed by the second routine are the same as those of the first embodiment. Therefore, in the same manner as the first embodiment, even when a driver executes a brake operation during the automatic braking, it is possible to generate a brake force required by a driver.

Also in the second embodiment, in the same manner as the first embodiment, by displacing the primary piston 40 according to the input rod 7 displacement quantity generated by a driver's braking operation, it is possible for the primary chamber 42 to be pressurized as the result of the thrust of the input rod 7 being amplified.

Furthermore, in the event that the drive motor 20 stops, a driver's brake pedal 100 force is conveyed to the primary piston 40 via the input rod 7, conveying member 30, and the moving member 28. Therefore, the master pressure increases thereby ensuring a prescribed brake force.

Furthermore, since the input rod 7 is not inserted into the primary chamber 42, a force in accordance with the master pressure does not act upon the brake pedal 100. Therefore, at the regenerative coordination braking operated in hybrid cars and electric automobiles, fluctuation of the master pressure will not be influential.

Furthermore, because the reaction force generation mechanism 103 can arbitrarily determine the brake pedal 100 reaction force, it is easy to change the operational feeling of the brake pedal 100.

As mentioned above, embodiments of the present invention have been described with reference to the drawings. However, those are only examples, and the present invention can be modified and improved in various ways based on the knowledge of those skilled in the art, without departing from its scope as laid down in the appended independent claim.

## Claims

1. A hydraulic braking device (1) comprising a master cylinder (9),
a first pressurizing and depressurizing means (7, 100) for pressurizing and depressurizing the master cylinder (9),
a second pressurizing and depressurizing means (4, 40) for pressurizing and depressurizing the master cylinder (9) independently of the first pressurizing and depressurizing means (7),
a brake force control means (2) for calculating a target brake force and determining a target master cylinder pressure based on the calculated target brake force, and
a plurality of wheel cylinders (11a-11d) operated by working fluid pressure applied by the master cylinder (9), wherein
the brake force control means (2) being adapted to execute a master pressure control adapted to control the second pressurizing and depressurizing means according to the target master cylinder pressure,
**characterized in that**
the brake force control means (2) being further adapted to execute a plurality of brake controls, wherein
the brake force control means (2) is adapted to select and start one of the brake controls when the first pressurizing and depressurizing means (7, 100) is operated by a driver's braking operation during the master pressure control, and wherein
the brake force control means (2) is adapted to control the second pressurizing and depressurizing means (4, 40) in the brake control state according to three brake controls:
- a first brake control which displaces the second pressurizing and depressurizing means (40) by an amount proportional to a displacement quantity of the first pressurizing and depressurizing means (7, 100),
- a second brake control which displaces the second pressurizing and depressurizing means (40) by an amount proportional to a displacement quantity of the first pressurizing and depressurizing means (7, 100) plus a prescribed amount of displacement, and
- a third brake control which displaces the second pressurizing and depressurizing means (40) so that the second pressurizing and depressurizing means (40) releases the pressure on the master cylinder in the state in which the displacement quantity of the first pressurizing and depressurizing means (7, 100) has returned to zero.

2. The hydraulic braking device (1) according to claim 1, wherein
the brake force control means (2) is adapted to, when all of the wheel cylinders (11a-11d) are operated in the master pressure control, after having switched to one of the brake controls, select the first brake control when the first pressurizing and depressurizing means (7, 100) operates to pressurize the master cylinder (9), and select the first or third brake control when the first pressurizing and depressurizing means (7, 100) operates to depressurize the master cylinder (9).

3. The hydraulic braking device (1) according to claim 1, wherein
the brake force control means (2) is adapted to, when one or more wheel cylinders (11a-11d) are not operated in the master pressure control, after having switched to one of the brake controls, select the second brake control when the first pressurizing and depressurizing means (7, 100) operates to pressurize the master cylinder (9), and select the first or third brake control when the first pressurizing and depressurizing means (7, 100) operates to depressurize the master cylinder (9).

4. The hydraulic braking device (1) according to at least one of the claims 1-3, wherein
the first pressurizing and depressurizing means (7, 100) pressurizes and depressurizes the master cylinder (9) by operating the second pressurizing and depressurizing means (4, 40).

5. An automobile comprising a hydraulic braking device (1) according to at least one of the claims 1-4.

## Patentansprüche

1. Hydraulische Bremsvorrichtung (1) mit
einem Hauptzylinder (9),
einer ersten Druckbeaufschlagungs- und Druckverminderungseinrichtung (7, 100) zur Druckbeaufschlagung und Druckverminderung des Hauptzylinders (9),
einer zweiten Druckbeaufschlagungs- und Druckverminderungseinrichtung (4, 40) zur Druckbeaufschlagung und Druckverminderung des Hauptzylinders (9) unabhängig von der ersten Druckbeaufschlagungs- und Druckminderungseinrichtung (7),
einer Bremskraft-Steuereinrichtung (2) zum Berechnen einer Soll-Bremskraft und Bestimmen eines Soll-Hauptzylinderdrucks auf der Basis der berechneten Soll-Bremskraft, und
mehreren Radzylindern (11a-11d), die durch Arbeitsfluiddruck betätigt werden, welcher durch den Hauptzylinder (9) ausgeübt wird, wobei
die Bremskraft-Steuereinrichtung (2) dazu ausgelegt ist, eine Hauptdrucksteuerung auszuführen, die dazu ausgelegt ist, die zweite Druckbeaufschlagungs- und Druckverminderungseinrichtung nach Maßgabe des Soll-Hauptzylinderdrucks zu steuern,
**dadurch gekennzeichnet, dass**
die Bremskraft-Steuereinrichtung (2) ferner dazu ausgebildet ist, mehrere Bremssteuerungen auszuführen, wobei
die Bremskraft-Steuereinrichtung (2) dazu auslegt ist, eine der Bremssteuerungen auszuwählen und zu starten, wenn die erste Druckbeaufschlagungs- und Druckverminderungseinrichtung (7, 100) durch einen Bremsvorgang eines Fahrers während der Hauptdrucksteuerung betätigt wird, und wobei
die Bremskraft-Steuereinrichtung (2) dazu ausgelegt ist, die zweite Druckbeaufschlagungs- und Druckverminderungseinrichtung (4, 40) in dem Bremssteuerzustand nach Maßgabe von drei Bremssteuerungen zu steuern:
- einer ersten Bremssteuerung, die die zweite Druckbeaufschlagungs- und Druckverminderungseinrichtung (40) um einen Betrag versetzt, der proportional zu einer Versetzungsmenge der ersten Druckbeaufschlagungs- und Druckverminderungseinrichtung (7, 100) ist,
- einer zweiten Bremssteuerung, die die zweite Druckbeaufschlagungs- und Druckverminderungseinrichtung (40) um einen Betrag versetzt, der proportional zu einer Versetzungsmenge der ersten Druckbeaufschlagungs- und Druckverminderungseinrichtung (7, 100) plus einem vorgegebenen Versetzungsbetrag ist, und
- einer dritten Bremssteuerung, die die zweite Druckbeaufschlagungs- und Druckverminderungseinrichtung (40) so versetzt, dass die zweite Druckbeaufschlagungs- und Druckverminderungseinrichtung (40) den Druck auf den Hauptzylinder in dem Zustand freisetzt, in welchem die Versetzungsmenge der ersten Druckbeaufschlagungs- und Druckverminderungseinrichtung (7, 100) zu Null zurückgekehrt ist.

2. Hydraulische Bremsvorrichtung (1) nach Anspruch 1, wobei
die Bremskraft-Steuereinrichtung (2) dazu ausgelegt ist, wenn alle Radzylinder (11a-11d) in der Hauptdrucksteuerung betätigt werden, nachdem sie zu einer der Bremssteuerung umgeschaltet hat, die erste Bremssteuerung auszuwählen, wenn die erste Druckbeaufschlagungs- und Druckverminderungseinrichtung (7, 100) arbeitet, um den Hauptzylinder (9) mit Druck zu beaufschlagen, und die erste oder dritte Bremssteuerung auszuwählen, wenn die erste Druckbeaufschlagungs- und Druckverminderungseinrichtung (7, 100) arbeitet, um den Druck des Hauptzylinders (9) zu vermindern.

3. Hydraulische Bremsvorrichtung (1) nach Anspruch 1, wobei
die Bremskraft-Steuereinrichtung (2) dazu ausgelegt ist, wenn einer oder mehrere Radzylinder (11a-11d) nicht in der Hauptdrucksteuerung betätigt werden, nachdem sie zu einer der Bremssteuerungen umgeschaltet hat, die zweite Bremssteuerung auszuwählen, wenn die erste Druckbeaufschlagungs- und Druckverminderungseinrichtung (7, 100) arbeitet, um den Hauptzylinder (9) mit Druck zu beaufschlagen, und die zweite oder dritte Bremssteuerung auszuwählen, wenn die erste Druckbeaufschlagungs- und Druckverminderungseinrichtung (7, 100) arbeitet, um den Druck des Hauptzylinders (9) zu vermindern.

4. Hydraulische Bremsvorrichtung (1) nach mindestens einem der Ansprüche 1 bis 3, wobei
die erste Druckbeaufschlagungs- und Druckverminderungseinrichtung (7,100) durch Betätigen der zweiten Druckbeaufschlagungs- und Druckverminderungseinrichtung (4, 40) den Hauptzylinder (9) mit Druck beaufschlägt und seinen Druck vermindert.

5. Kraftfahrzeug, das eine hydraulische Bremsvorrichtung (1) nach mindestens einem der Ansprüche 1 bis 4 umfasst.

## Revendications

1. Dispositif de freinage hydraulique (1) comprenant
un maître-cylindre (9),
un premier moyen de pressurisation et de dépressurisation (7, 100) pour pressuriser et dépressuriser le maître-cylindre (9),
un second moyen de pressurisation et de dépressurisation (4, 40) pour pressuriser et dépressuriser le maître-cylindre (9) indépendamment du premier moyen de pressurisation et de dépressurisation (7),
un moyen de commande de force de freinage (2) pour calculer une force de freinage cible et déterminer une pression cible du maître-cylindre en se basant sur la force de freinage cible calculée, et
une pluralité de cylindres de roues (11a-11d) actionnés par une pression de fluide de travail appliquée par le maître-cylindre (9), dans lequel
le moyen de commande de force de freinage (2) est adapté à exécuter une commande de pression maître adaptée à commander le second moyen de pressurisation et de dépressurisation en accord avec la pression cible dans le maître-cylindre,
**caractérisé en ce que**
le moyen de commande de force de freinage (2) est en outre adapté à exécuter une pluralité de commandes de freinage, dans lesquelles
le moyen de commande de force de freinage (2) est adapté à sélectionner et à démarrer l'une des commandes de freinage quand le premier moyen de pressurisation et de dépressurisation (7, 100) est actionné par une opération de freinage du conducteur pendant la commande de pression maître, et dans lequel
le moyen de commande de force de freinage (2) est adapté à commander le second moyen de pressurisation et de dépressurisation (4, 40) dans l'état de commande de freinage en accord avec trois commandes de freinage :
- une première commande de freinage qui déplace le second moyen de pressurisation et de dépressurisation (40) d'une quantité proportionnelle à une quantité de déplacement du premier moyen de pressurisation et de dépressurisation (7, 100),
- une seconde commande de freinage qui déplace le second moyen de pressurisation et de dépressurisation (40) d'une quantité proportionnelle à une quantité de déplacement du premier moyen de pressurisation et de dépressurisation (7, 100) plus une quantité de déplacement prescrite, et
- une troisième commande de freinage qui déplace le second moyen de pressurisation et de dépressurisation (40) de telle sorte que le second moyen de pressurisation et de dépressurisation (40) relâche la pression sur le maître-cylindre dans l'état dans lequel la quantité de déplacement du premier moyen de pressurisation et de dépressurisation (7, 100) est ramenée à zéro.

2. Dispositif de freinage hydraulique (1) selon la revendication 1, dans lequel
le moyen de commande de force de freinage (2) est adapté, quand tous les cylindres de roues (11a-11d) sont actionnés dans la commande de pression maître, après avoir commuté vers l'une des commandes de freinage, pour sélectionner la première commande de freinage quand le premier moyen de pressurisation et de dépressurisation (7, 100) fonctionne pour pressuriser le maître-cylindre (9), et pour sélectionner la première ou la troisième commande de freinage quand le premier moyen de pressurisation et de dépressurisation (7, 100) fonctionne pour dépressuriser le maître-cylindre (9).

3. Dispositif de freinage hydraulique (1) selon la revendication 1, dans lequel
le moyen de commande de force de freinage (2) est adapté, quand un ou plusieurs cylindres de roues (11a-11d) ne sont pas actionnés dans la commande de pression maître, après avoir commuté vers l'une des commandes de freinage, pour sélectionner la seconde commande de freinage quand le premier moyen de pressurisation et de dépressurisation (7, 100) fonctionne pour pressuriser le maître-cylindre (9), et pour sélectionner la première ou la troisième commande de freinage quand le premier moyen de pressurisation et de dépressurisation (7, 100) fonctionne pour dépressuriser le maître-cylindre (9).

4. Dispositif de freinage hydraulique (1) selon l'une au moins des revendications 1 à 3, dans lequel
le premier moyen de pressurisation et de dépressurisation (7, 100) pressurise et dépressurise le maître-cylindre (9) en actionnant le second moyen de pressurisation et de dépressurisation (4, 40).

5. Automobile comprenant un dispositif de freinage hydraulique (1) selon l'une au moins des revendications 1 à 4.
